Europäisches Patentamt

European Patent Office

Office européen des brevets

(11) Numéro de publication: **0 274 962 B1**

(12) **FASCICULE DE BREVET EUROPEEN**

(45) Date de publication du fascicule du brevet:
**18.07.90**

(21) Numéro de dépôt: **87403004.2**

(22) Date de dépôt: **29.12.87**

(51) Int. Cl.⁵: **C03B 33/02,** C03B 33/10

(54) **Machine automatique verticale pour la coupe du verre.**

(30) Priorité: **30.12.86 FR 8618327**

(43) Date de publication de la demande:
**20.07.88 Bulletin 88/29**

(45) Mention de la délivrance du brevet:
**18.07.90 Bulletin 90/29**

(84) Etats contractants désignés:
**AT BE DE GB NL SE**

(56) Documents cités:
**US-A- 4 545 515**

(73) Titulaire: **Cassese, Antoine, Les Essarts No 7 Saint Germain Laxis, F-77950 Maincy(FR)**

(72) Inventeur: **Cassese, Antoine, Les Essarts No 7 Saint Germain Laxis, F-77950 Maincy(FR)**

(74) Mandataire: **Lepeudry-Gautherat, Thérèse et al, CABINET LEPEUDRY 6 rue du Faubourg St-Honoré, F-75008 Paris(FR)**

ACTORUM AG

## Description

La présente invention se rapporte à une machine à couper le verre et concerne plus précisément une machine automatique verticale à vérin pneumatique.

Des machines murales sont déjà largement utilisées pour la coupe industrielle de verres ou de plastiques se présentant en plaques ou en bandes disposées verticalement sur chant, la coupe étant assurée par une molette de déplaçant de haut en bas, guidée dans ce mouvement par un support vertical. On préfère cette solution aux systèmes classiques de coupe à plat, qui présentent l'inconvénient de nécessiter une table de coupe de grande dimension, et qui exigent beaucoup de précautions de la part des utilisateurs pour manutentionner les plaques à découper sans risque de les casser. Les machines dietes murales ou verticales évitent donc ces inconvénients et se placent aisément dans le coin d'un atelier ou d'un magasin. Elles comprennent essentiellement une gouttière horizontale servant de réceptacle à la plaque de verre, un dossier vertical courant le long de cette gouttière sur lequel la plaque vient en appui en étant légèrement inclinée pour éviter son basculement vers l'avant et un chariot porte-molette coulissant sur une rampe verticale placée en face d'un poteau servant de point d'appui à la plaque pendant l'opération de coupe. Le chariot associé à un contre-poids est manoeuvré à l'aide d'une poignée par un utilisateur qui assure manuellement la coupe du verre prépositionné dans la machine.

Ces machines manuelles ont évidemment des capacités d'utilisation limitées aux cadences de coupe que peut assurer un utilisateur, du fait du poids du chariot et de la force qu'il doit exercer sur la poignée au moment de la coupe. Il y a aussi une limitation aux dimensions des verres coupés puisqu'une seule personne ne peut déplacer verticalement ce chariot jusqu'à une hauteur inaccessible. Enfin quand la trace de coupe a été effectuée, le verre est cassé manuellement par la personne qui pour cela doit créer un choc sur le morceau à découper et le maintenir.

L'invention a donc pour objet une machine qui apporte un certain nombre d'avantages et d'améliorations aux systèmes existants, en s'affranchissant notamment des inconvénients précédemment énumérés.

La machine à couper le verre conforme à l'invention, qui comporte un support horizontal destiné à recevoir sur chant la plaque de verre à découper, une rampe verticale sur laquelle coulisse un chariot porte-molette, et des butées mobiles placées sur le support horizontal et associées à des dispositifs de lecture de positionnement, a principalement pour objet un chariot porte-molette déplaçable verticalement de bas en haut et de haut en bas sur une hauteur prédéterminée de la rampe verticale sous l'action d'un vérin du genre d'un vérin pneumatique, le porte-molette étant solidaire du chariot par l'intermédiaire d'un bras basculeur déplaçable par rapport au corps du chariot qui dispose d'un mécanisme de verrouillage dudit basculeur, des moyens fixes étant prévus sur la machine pour agir sur des éléments mobiles avec le chariot en vue de verrouillage du basculeur et de la commande du vérin.

Selon une caractéristique particulière de l'invention, le mécanisme de verrouillage du basculeur contre le chariot est assuré par un levier d'accrochage pivotant sur un flanc du chariot et accrochant un ergot solidaire du basculeur sous l'action d'un ressort de rappel, le levier d'accrochage dépassant légèrement vers l'avant de la plaque verticale. De plus, le basculeur est soutenu à sa base par un étrier solidaire du chariot par des axes horizontaux de pivotement, et à sa partie supérieure est interposé entre lui et le chariot un ressort de pression.

Selon une autre caractéristique particulière de l'invention, le moyen fixe prévu sur la machine est une came placée à la base de la poutre verticale, destinée à agir sur un élément solidaire du chariot constitué d'une roulette, dans le sens du verrouillage du basculeur et complémentairement un autre moyen fixe prévu sur la machine est un contacteur fin de course, fixe et destiné à agir sur une butée solidaire du chariot pour la commande du vérin et d'un moyen de casse du verre.

Selon une caractéristique complémentaire de l'invention, une tringle est rapportée sur la face avant de la plaque verticale et sur toute sa hauteur et une butée coulissante munie d'une manette de blocage limitant la course du chariot est bloquée sur cette tringle à la hauteur prédéterminée recherchée.

L'invention comporte également d'autres caractéristiques particulières et des variantes qui apparaîtront dans la description suivante illustrant un mode de réalisation préférentiel de l'invention, qui doit être considéré comme un exemple non limitatif.

Il est fait référence aux dessins annexés qui représentent :

- figure 1 : une vue schématique de face de la machine,
- figure 2 : une représentation schématique de la machine vue en élévation à partir de la droite selon la figure 1,
- figure 3 : une vue à plus grande échelle selon III-III de la figure 1,
- figure 4: une vue à plus grande échelle selon IV-IV de la figure 1,
- figure 5 : une vue latérale à plus grande échelle du chariot de coupe,
- figure 6 : une vue de face partielle de la plaque verticale avec le système à butée coulissant.

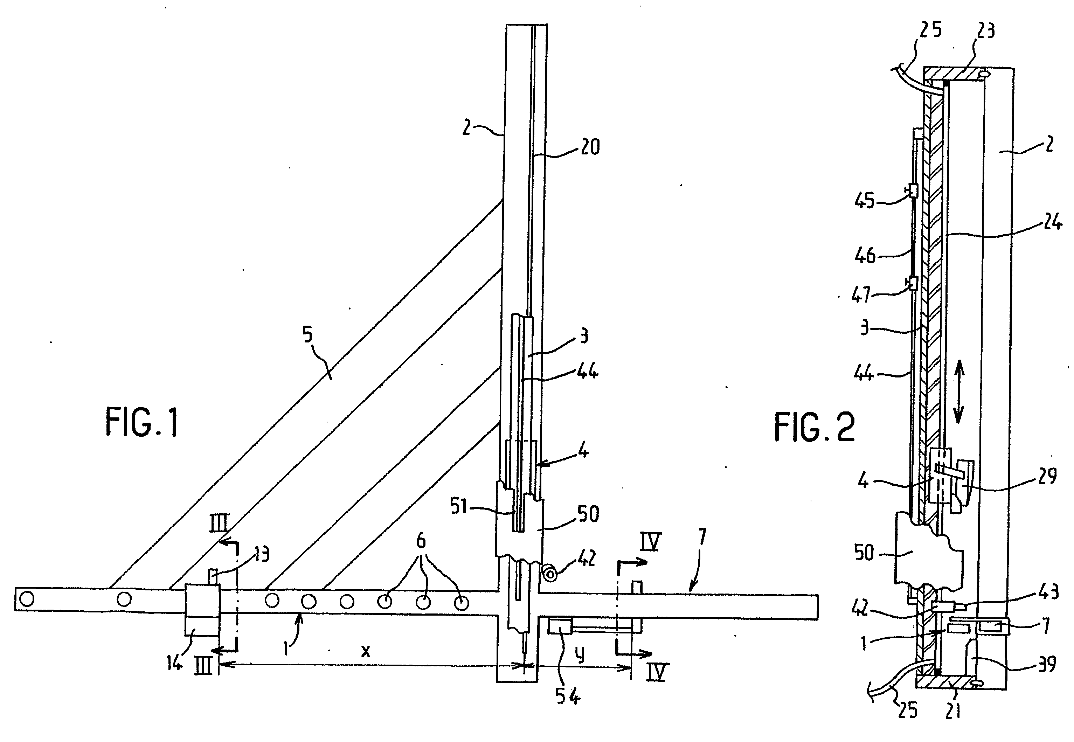

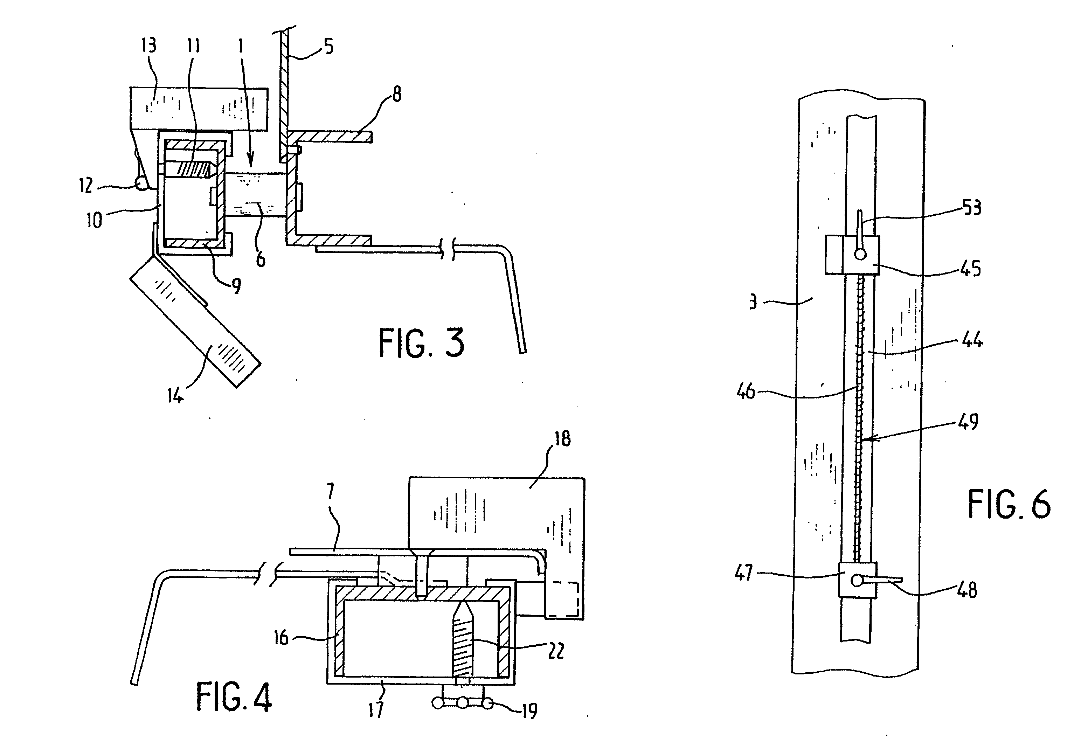

La machine représentée figures 1 et 2 comporte essentiellement une gouttière horizontale 1 servant de support à une plaque de verre qui repose sur chant, une poutre verticale d'appui 2 s'élevant au-dessus de la gouttière, une plaque verticale 3 parrallèle au poteau servant de guide au chariot de coupe 4 et comportant son mécanisme de levage, un dossier 5 pour l'appui des plaques, et une tablier 7 servant de support à la partie de verre à couper. Le fond de la gouttière 1 est constitué d'un certain nombre de galets 6 à axe horizontal destinés à supporter la plaque de verre et faciliter son déplacement. Comme on le voit précisément à la figure 3 les galets 6 sont montés entre deux cornières 8 et 9 en forme de U dont les bases forment les parois latérales de la gouttière 1.Sur la cornière 9 ouverte vers l'avant est monté un coulisseau 10 pouvant être bloqué sur le fond de la cornière par une vis 11 manoeuvré par une manette de blocage 12. Le coulisseau 10 supporte une butée escamotable 13 et un boîtier 14 renfermant un mètre-ruban dont une extrémité est fixée au pied de la poutre 2. Entre la cornière 8 et la poutre verticale 2 sont fixées des plaques 5 qui forment un dossier pour la plaque de verre à couper et contribuant au maintien de la poutre verticale et à sa rigidité par rapport à la gouttière.

De l'autre côté de la poutre 2, dans le prolongement et au niveau des galets 6 s'étend un tablier 7 destiné à servir d'appui au morceau de verre découpé. En se reportant à la figure 4 on voit que ce tablier est monté sur une autre cornière 16 en forme de U renversé sur laquelle est montée un autre coulisseau 17 supportant également une butée 18 et disposant d'une manette de blocage 19 commandant une vis de blocage 22. Au coulisseau 17 est accroché l'extrémité d'un mètre ruban localisé dans un boîtier prévu au pied de la poutre 2, et dont le zéro correspond à la ligne de coupe du chariot mobile 4.

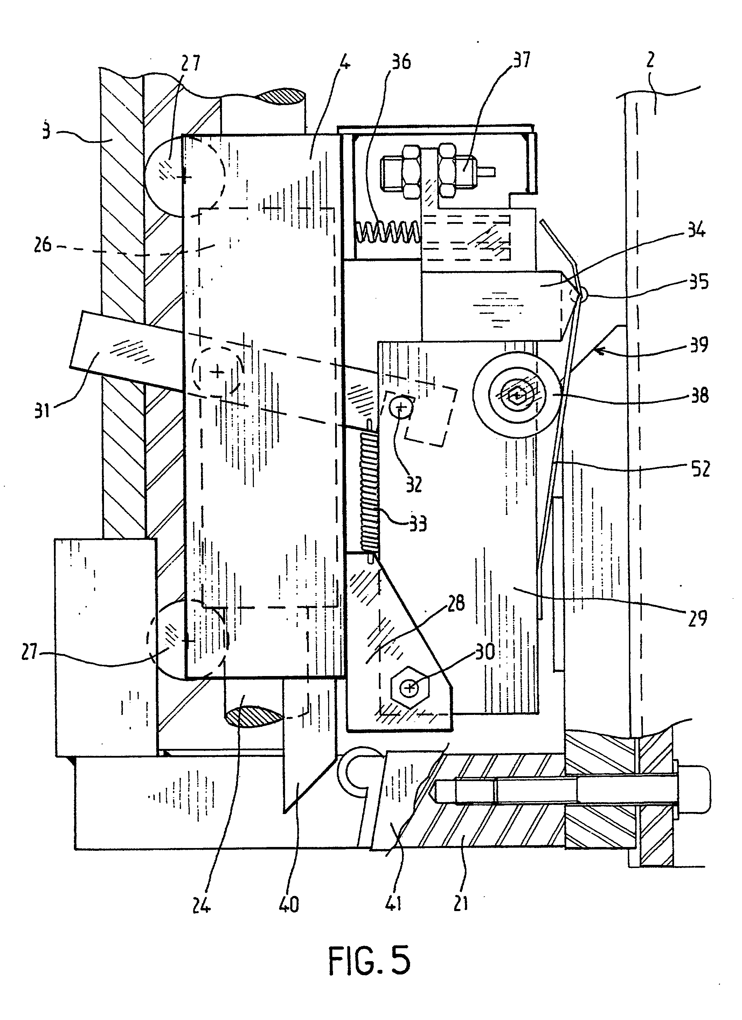

La gouttière 1 et le tablier 7 qui le prolonge sont fixés au pied de la poutre verticale 2 constituée d'un profilé dont la face tournée vers l'avant est munie sur toute sa hauteur d'une rainure 20. A la base de cette poutre au dessous du plan des galets 6 est fixée une potence 21 servant de support à une plaque verticale 3 qui s'élève par conséquent en avant de la poutre 2, et qui est écartée d'elle sur toute sa hauteur. La plaque 3 est fixée au sommet de la poutre par une autre potence 23. La plaque verticale 3 porte sur sa face orientée vers la poutre un tube de guidage 24 sur lequel coulisse le chariot de coupe 4. Celuici représenté plus en détail à la figure 5 en position basse au pied de la machine se présente comme un boîtier parallèlépipédique qui constitue l'organe mobile d'un vérin dont la partie fixe est le tube de guidage 24. A l'intérieur de ce tube creux 24 muni à chacune de ses extrémités de tubes de pression d'air 25, se déplace un piston auquel est asservi magnétiquement une glissière 26 à laquelle est fixé ledit chariot 4. Celui-ci dispose de roulettes d'appui 27 appliquées de part et d'autre du tube 24 contre la paroi de la plaque 3. A la base du chariot 4 est fixé un étrier 28 servant de support à un bras basculeur 29. On notera que ce basculeur 29 se place en arrière et le long du corps du chariot 4. Il est soutenu à sa base par l'étrier 28 par des axes horizontaux de pivotement 30, et il est retenu le long du chariot par un levier d'accrochage 31 pivotant sur un flanc du chariot et pouvant accrocher un ergot 32 solidaire du basculeur. Dans la position représentée à la figure 5 le levier d'accrochage rappelé par unr essort de rappel 33 maintient le basculeur 29 contre le corps de chariot. Le levier 31 disposé sur le flanc du chariot 4, dont la largeur est voisine de la largeur de la plaque verticale 3, dépasse légèrement vers l'avant de cette plaque. Sur ledit basculeur 29, à sa partie supérieure,est fixé un porte-molette 34 dont la molette de coupe 35 se trouve au droit de la rainure 20 pratiquée sur la poutre verticale 2. Une rampe de guidage 52 fixée sur l'arrière du basculeur 29 est en appui sur le porte-molette 34 et dispose d'une ouïe pour le passage de la molette 35. D'autre part, entre la partie supérieure du chariot 4 et la partie supérieure du basculeur 29, est interposé un ressort de pression 36 qui est en position comprimée quand le basculeur est accroché par le levier 31. Un élément amortisseur 37 solidaire du bras basculeur 29 permet d'amortir son mouvement de pivotement sous l'action du ressort 36. Le bras basculeur 29 est également pourvu sur un de ses côtés d'une roulette 38 destinée à prendre appui sur une came fixe 39 prévue à la base de la poutre verticale 2.

Enfin on remarque que le chariot de coupe 4 est muni à sa partie inférieure d'une butée 40 qui actionne en position basse un contacteur fin de course 41 monté sur la potence 21. Un vérin de casse 42 dont le fonctionnement est asservi audit contacteur est monté légèrement au-dessus du niveau du tablier 7, à proximité du puits de cheminement du chariot entre la poutre 2 et la plaque 3, et orienté de telle sorte que son embout mobile de casse 43 se déploie horizontalement en direction de la plaque de verre découpé avec une certaine inclinaison sur cette plaque.

D'autre part, en se reportant plus précisément aux figures 1, 2 et 6, on voit que sur la face avant de la plaque verticale 3 et sur toute sa hauteur est rapportée une tringle 44 sur laquelle coulisse une butée 45,limitant la course du chariot 4,qui peut être bloquée sur la tringle par une manette de réglage et de blocage 53. Cette butée 45 déborde de la largeur de la tringle et coupe le trajet du levier 31 solidaire du chariot 4. De plus elle est reliés par une tige 46 à un coulisseau de renvoi 47 également muni d'une manette de réglage et de blocage 48 ; la tige 46 coulisse librement dans la butée 45, et un ressort 49 coaxial à la tige comprimé entre celle-ci et le coulisseau 47 tend à les maintenir en position d'écartement maximum.

Enfin, un capot 50 coiffe la plaque verticale 3 et le puits de cheminement du chariot laissant bien évidemment un espace entre lui et la poutre verticale 2 pour le passage des plaques de verre. Une rainure verticale 51 est prévue dans ce capot pour le passage des manettes 48 et 53.

La machine fonctionne de la façon suivante: au repos le chariot de coupe 4 est dans une position haute, déterminée par l'altitude de la butée 45 sur la tringle 44. Quand à la fin de l'opération de coupe précédente le chariot 4 est remonté, l'extrémité avant de son levier pivotant 31 est venue heurter la butée fixe 45 immobilisée à une hauteur déterminée à l'aide de la manette 53. Le levier 31 pivote par conséquent à l'encontre de la force du ressort 33 ce qui a pour effet de le décrocher de l'ergot 32. Le bras basculeur 29 étant libéré va basculer autour des axes 30 sous l'effet de la force du ressort 36, le mécanisme amortisseur 37 ayant pour fonction de ralentir ce mouvement de basculement. Sous l'action de ce ressort le porte-molette 34 est appliqué contre le profilé constituant la poutre verticale 2. Le chariot 4 reste immobilisé dans cette position par la butée 45 en appui sur le levier 31. La molette 35 est engagée dans la rainure 20 dudit profilé.

La hauteur de blocage du chariot est donc déterminée par la hauteur donnée à la butée 45, qui est fonction de la dimension des plaques de verre dont la coupe est envisagée. Au cas où cette hauteur serait trop importante pour être accessible à un usager, il dispose du coulisseau de renvoi 47 qui lui permet de déplacer la butée et de la bloquer à l'altitude de voulue grâce à sa propre manette de blocage 48 et à la tige 46. Le libre coulissement de la tige dans la butée 45 à l'encontre de la force du ressort 49 autorise à l'inverse de placer la butée du chariot dans une position basse, en permettant le rapprochement de coulisseau 47 et de cette butée.

Le chariot étant ainsi immobilisé en position haute, l'utilisateur peut déplacer la plaque de verre reposant sur chant sur les galets 6 et en appui contre le dossier 5. Il fait en sorte que la butée 13 soit localisée sur la cornière 9 et verrouillée par la manette 12 à une distance x de la rainure 20 où aura lieu la coupe, distance lue sur le mètre-ruban 14. Cette distance x correspond à une largeur de coupe recherchée quand on cherche à obtenir une plaque découpée de plus grande dimension. L'utilisateur peut également faire coulisser la plaque à découper jusqu'à ce qu'elle vienne en appui contre la butée 18, positionnée et verrouillée par la manette 19 à une distance y de la rainure 20, distance lue sur le mètre-ruban 54. Cette distance y correspond à une largeur de coupe recherchée quand la mesure est plus aisée à faire de ce côté. Quoiqu'il en soit, les butées 13 et 18 servent à maintenir en place la plaque à découper pour que la découpe ait lieu à la distance voulue.

Le verre étant en place, l'utilisateur agit sur une pédale de commande non représentée qui commande le vérin pneumatique ; une pression d'air exercée dans le tube 24 par le tube de pression supérieur 25 provoque la descente du chariot mobile 4 qui coulisse sur ce tube 24, ses roulettes 27 roulant sur la plaque 3. Durant le mouvement de descente du chariot, le basculeur 29 reste appliqué contre le profilé de la poutre 2, par l'intermédiaire de la rampe de guidage 52, sous l'action du ressort 36. Quand le basculeur atteint la tranche de la plaque de verre, cette rampe 52 glisse sur la tranche et permet à la molette de coupe 35 d'attaquer le verre uniformément. Quand la chariot 4 arrive en fin de course à la partie inférieure de la poutre, c'est-à-dire au-dessous du niveau du tablier 7, la trace de coupe est donc terminée. La roulette latérale 38 attaque alors la came fixe 39 et ainsi le bras basculeur 29 est repoussé contre le corps du chariot. L'ergot 32 peut s'encliqueter dans le levier 31. Le chariot se retrouve alors dans la position représentée à la figure 5. Aussitôt cette opération la butée 40 atteint le contacteur fin de course 41, le chariot s'immobilise et le contacteur entraîne l'arrêt de l'alimentation de fluide dans le tube de vérin ; parallèlement le contacteur commande la mise en oeuvre du vérin de casse 42 dont l'embout 43 vient frapper la partie de plaque de verre située au-dessus du tablier 7, et la casse. Dès que la pédale est relâchée la pression s'établit à la base du tube 24 et le chariot 4 remonte en position haute jusqu'à ce qu'il s'immobilise au niveau de la butée 45 dans les conditions indiquées précédemment. Il est alors prêt pour un nouveau cycle de coupe.

Cette machine d'un maniement très simple convient donc particulièrement pour la coupe de verre simple, double, laminé ..., mais aussi pour d'autres produits tels que plastiques rigides ou analogues et cartons.

## Revendications

1. Machine verticale pour la coupe du verre comportant un support horizontal (1, 7) destiné à recevoir sur chant la plaque de verre à découper, une rampe verticale (3) sur laquelle coulisse un chariot porte-molette (4), placée en face d'un poteau vertical (2) servant de point d'appui à la plaque pendant l'opération de coupe et comportant des butées mobiles (13, 18) placées sur le support horizontal et associées à des dispositifs de lecture de positionnement, caractérisé en ce que, pour rendre la machine automatique, le chariot (4) porte-molette (7) est déplaçable verticalement de bas en haut et de haut en bas sur une hauteur prédéterminée de la rampe verticale (3) sous l'action d'un vérin (24, 26) du genre d'un vérin pneumatique, en ce que le porte-molette (34) est solidaire du chariot par l'intermédiaire d'un bras basculeur (29) déplaçable par rapport au corps du chariot (4) qui dispose d'un mécanisme de verrouillage (31, 32) dudit basculeur, et en ce que des moyens fixes (39, 41) sont prévus sur la machine pour agir sur des éléments (38, 40) mobiles avec le chariot en vue du verrouillage du basculeur et de la commande du vérin.

2. Machine automatique selon la revendication 1, caractérisée en ce que la rampe verticale est une plaque (3) fixée à une poutre (2) constituant le poteau vertical par des potences (21, 23), plaque dont la face orientée vers la poutre porte un tube de guidage (24) du chariot (4) ainsi que le mécanisme mobile d'entraînement dudit chariot.

3. Machine automatique selon les revendications 1 et 2, caractérisée en ce que le tube de guidage (24) est creux et renferme un piston déplaçable pneumatiquement dans le tube, auquel est asservi magnétiquement ledit chariot (4).

4. Machine automatique selon la revendication 1, caractérisée en ce que le mécanisme de verrouillage de basculeur (29) contre le chariot (4) est assuré par un levier d'accrochage (31) pivotant sur un flanc du chariot et accrochant un ergot (32) solidaire du basculeur sous l'action d'un ressort de rappel (33).

5. Machine automatique selon la revendication 4, caractérisée en ce que le levier d'accrochage (31) dépasse légèrement vers l'avant de la plaque verticale (3).

6. Machine automatique selon la revendication 1, caractérisée en ce que le basculeur (29) est soutenu à sa base par un étrier (28) solidaire du chariot (4) par des axes horizontaux de pivotement (30), et en ce que à sa partie supérieure est interposé entre lui et le chariot un ressort de pression (36).

7. Machine automatique selon la revendication 6, caractérisée en ce qu'un élément amortisseur (37) est prévu sur le bras basculeur (29).

8. Machine automatique selon la revendication 1, caractérisée en ce qu'une rampe de guidage (52) fixée sur l'arrière du basculeur (29) est en appui sur le porte-molette (34) et dispose d'une ouïe pour le passage de la molette (35).

9. Machine automatique selon la revendication 1, caractérisée en ce qu'un moyen fixe prévu sur la machine est une came (39) placée à la base de la poutre verticale (2) destinée à agir sur un élément solidaire du chariot (4) constitué d'une roulette (38), dans le sens du verrouillage du basculeur (29).

10. Machine automatique selon la revendication 1, caractérisée en ce qu'un moyen fixe prévu sur la machine est un contacteur fin de course (41) monté sur la potence (21) destiné à agir sur une butée (40) solidaire du chariot (4) pour la commande du vérin (24, 26) et d'un moyen de casse de verre (42, 43).

11. Machine automatique selon les revendications 1 et 10, caractérisée en ce que le moyen de casse est un vérin (42) monté au-dessus du support horizontal (7) et orienté pour que son embout mobile de casse (43) se déploie horizontalement et selon une certaine inclinaison en direction de la plaque de verre.

12. Machine automatique selon les revendications 1 et 2, caractérisée en ce qu'une tringle (44) est rapportée sur la face avant de la plaque verticale (3) et sur toute sa hauteur et en ce qu'une butée coulissante (45) munie d'une manette de blocage (53), limitant la course du chariot (4) est bloquée à la hauteur prédéterminée recherchée.

13. Machine automatique selon la revendication 12, caractérisée en ce que la butée (45) est reliée par une tige (46) à un coulisseau de renvoi (47) également muni d'une manette de réglage et de blocage (48).

14. Machine automatique selon la revendication 13, caractérisée en ce que la tige (46) coulisse librement dans la butée (45), un ressort (49) coaxial à la tige étant interposé entre ladite butée et le coulisseau (47).

15. Machine automatique selon la revendication 1, caractérisée en ce qu'elle comporte des galets (6) montés entre deux supports en forme de cornières (8, 9) constituant le support horizontal de la plaque de verre, et en ce qu'un coulisseau 10 blocable sur une cornière 9 porte une butée 13 et un boîtier 14 renfermant un mètre-ruban dont une extrémité est fixée au pied de la poutre 2.

16. Machine automatique selon la revendication 1, caractérisée en ce qu'elle comporte un tablier servant de support horizontal du morceau de verre à découper et monté sur une cornière, en ce qu'un coulisseau 17 blocable sur ladite cornière 16 porte une butée 18 et en ce que l'extrémité d'un mètre-ruban localisé au pied de la poutre 2 est attachée audit coulisseau.

**Patentansprüche**

1. Vertikale Maschine für das Schneiden von Glas mit einem horizontalen Träger (1, 7) zur Aufnahme der zu schneidenden Glasplatte an deren Schmalseite, einer vertikalen Rampe (3), auf der ein Wagen (4) mit Schneidwerkzeug gleitet, und zwar in einer Position vor einer vertikalen Stütze (2), die während des Schneidvorganges zur Abstützung der Glasplatte dient und mit verstellbaren Anschlägen (13, 18), die auf dem horizontalen Träger angeordnet und mit Vorrichtungen zum Ablesen der Position verbunden sind, dadurch gekennzeichnet, daß der Wagen (4) mit seinem Schneidwerkzeug (7) zur Automatisierung der Maschine vertikal von unten nach oben und von oben nach unten verfahrbar ist, und zwar über eine Höhe, die von der vertikalen Rampe (3) vorgegeben ist und zwar aufgrund der Wirkung einer Hubvorrichtung (24, 26) der Art einer pneumatischen Hubvorrichtung, wobei das Schneidwerkzeug (34) über einen relativ zum Wagen (4) verstellbaren Schwenkarm (29) mit dem Wagen verbunden ist, der seinerseits einen Verriegelungsmechanismus (31, 32) für den genannten Schwenkarm aufweist, und wobei feste Mittel (39, 41) an der Maschine angeordnet sind, um auf Elemente (38, 40) einzuwirken, die mit dem Wagen im Hinblick auf die Verriegelung des Schwenkarmes und die Steuerung der Hubvorrichtung beweglich sind.

2. Automatische Maschine nach Anspruch 1, dadurch gekennzeichnet, daß die vertikale Rampe als Platte (3) ausgebildet ist, die an einer Stütze (2) befestigt ist, die durch Arme (21, 23) die vertikale Stütze bildet, wobei die der Stütze zugewandte Seite der Platte eine Führungsstange (24) für den Wagen (4) sowie den beweglichen Antriebsmechanismus für den genannten Wagen trägt.

3. Automatische Maschine nach den Ansprüchen 1 und 2, dadurch gekennzeichnet, daß die Führungsstange (24) hohl ist und einen in ihr pneumatisch verfahrbaren Kolben enthält, dem der genannte Wagen (4) magnetisch zugeordnet ist.

4. Automatische Maschine nach Anspruch 1, dadurch gekennzeichnet, daß der Verriegelungsmechanismus des Schwenkarmes (29) gegenüber dem Wagen (4) durch einen hakenartigen Hebel (31) gebildet ist, der um eine Seite des Wagens verschwenkbar und mit einer Nase (32) verhakbar ist, die mit dem Schwenkhebel verbunden ist, wobei diese Schwenkbewegung unter Wirkung einer Feder (33) erfolgt.

5. Automatische Maschine nach Anspruch 4, dadurch gekennzeichnet, daß der hakenartige Hebel (31) leicht nach vorn über die vertikale Platte (3) vorsteht.

6. Automatische Maschine nach Anspruch 1, dadurch gekennzeichnet, daß der Schwenkarm (29) an seiner Basis an einem Winkel (28) gelagert ist, der mit dem Wagen (4) durch horizontale Schwenkachsen (30) verbunden ist und daß an seinem oberen Bereich eine Druckfeder (36) zwischen ihm und dem Wagen zwischengeschaltet ist.

7. Automatische Maschine nach Anspruch 6, dadurch gekennzeichnet, daß ein Dämpfungselement (37) an dem Schwenkarm (29) angeordnet ist.

8. Automatische Maschine nach Anspruch 1, dadurch gekennzeichnet, daß eine Führungsrampe (52) an der Rückseite des Schwenkarmes (29) angeordnet ist und auf das Schneidwerkzeug (34) drückt und eine Ausnehmung für den Durchtritt des Schneidrades (25) aufweist.

9. Automatische Maschine nach Anspruch 1, dadurch gekennzeichnet, daß ein an der Maschine angeordnetes starres Mittel als Bahnkurve (39) ausgebildet und an der Basis der vertikalen Stütze (2) positioniert ist zur Einwirkung auf ein mit dem Wagen (4) verbundenes Element in Form einer Rolle (38), und zwar im Verriegelungssinn des Schwenkarmes (29).

10. Automatische Maschine nach Anspruch 1, dadurch gekennzeichnet, daß ein an der Maschine angeordnetes starres Mittel ein Endschalter (41) ist, der an dem Arm (21) montiert ist und mit einem Anschlag (40) zusammenwirkt, der seinerseits mit dem Wagen (4) verbunden ist, um die Hubvorrichtung (24, 26) und Mittel zum Abbrechen des Glases (42, 43) zu steuern.

11. Automatische Maschine nach den Ansprüchen 1 und 10, dadurch gekennzeichnet, daß das Mittel zum Brechen ein Druckglied (42) ist, das oberhalb des horizontalen Trägers (7) montiert und so ausgerichtet ist, daß sein bewegliches Brechelement sich horizontal erstreckt und mit einer gewissen Neigung in Richtung auf die Glasplatte.

12. Automatische Maschine nach den Ansprüchen 1 und 2, dadurch gekennzeichnet, daß eine Stange (44) an der Vorderseite der vertikalen Platte (3) und über deren gesamte Höhe angeordnet ist und daß ein verstellbarer Anschlag (45) mit einem Blockiergriff (53) zur Begrenzung des Verfahrweges des Wagens (4) auf der gewünschten vorbestimmten Höhe fixierbar ist.

13. Automatische Maschine nach Anspruch 12, dadurch gekennzeichnet, daß der Anschlag (45) über einen Stab (46) mit einem Kulissenstein (47) verbunden ist, der ebenfalls einen Feststell- und Blockiergriff (48) aufweist.

14. Automatische Maschine nach Anspruch 13, dadurch gekennzeichnet, daß der Stab (46) frei in dem Anschlag (45) gleitet und daß eine zu dem Stab koaxiale Feder (49) zwischen dem genannten Anschlag und dem Kulissenstein (47) zwischengeschaltet ist.

15. Automatische Maschine nach Anspruch 1, dadurch gekennzeichnet, daß sie Laufrollen (6) aufweist, die zwischen zwei Trägern in Form von Winkeln (8, 9) montiert sind, die den horizontalen Träger der Glasplatte bilden und daß ein auf dem einen Winkel (9) fixierbarer Schieber (10) einen Anschlag (13) und ein Gehäuse (14) zur Aufnahme eines Maßbandes trägt, wobei das eine Ende dieses Maßbandes am Fuß der Stütze (2) befestigt ist.

16. Automatische Maschine nach Anspruch 1, dadurch gekennzeichnet, daß sie eine Auflage aufweist, die als horizontaler Träger für das zu schneidende Glasstück dient und die auf einem Winkel (16) montiert ist, und daß ein auf diesem Winkel (16) fixierbarer Schieber (17) einen Anschlag (18) trägt, wobei das Ende eines am Fuß der Stütze (2) angeordneten Maßbandes an diesem Schieber festgelegt ist.

## Claims

1. A vertical glass-cutting machine comprising a horizontal support (1, 7) intended to receive edgewise the glass plate to be cut, a vertical column (3) on which a cutting wheel-carrying carriage (4) slides and which is placed opposite a vertical post (2) sewing as a bearing point for the plate during the cutting operation and comprising movable stops (13, 18) placed on the horizontal support and combined with position-reading devices, characterized in that, in order to make the machine automatic, the cutting wheel-carrying carriage (4) can be displaced vertically upwards and downwards over a predetermined height of the vertical column (3) when acted upon by a jack (24, 26) of the pneumatic jack type, in that the cutting-wheel carrier (34) is connected to the carriage via a rocker arm (29) which can be displaced relative to the body of the carriage (4) which has a mechanism (31, 32) for locking the said rocker, and in that fixed means (39, 41) are provided on the machine for acting upon elements (38, 40) which can move with the carriage with a view to locking the rocker and the jack control.

2. An automatic machine according to claim 1, characterized in that the vertical column is a plate (3) fastened via brackets (21, 23) to a beam (2) forming the vertical post, in which plate the face facing the beam carries a guide tube (24) for the carriage (4), as well as the movable mechanism for driving the said carriage.

3. An automatic machine according to claims 1 and 2, characterized in that the guide tube (24) is hollow and encloses a piston which can be displaced pneumatically in the tube which controls the said carriage (4) magnetically.

4. An automatic machine according to claim 1, characterized in that the mechanism for locking the rocker (29) against the carriage (4) is realized by a catch lever (31) pivoting on a flank of the carriage and catching a pin (32) integral with the rocker when acted upon by a return spring (33).

5. An automatic machine according to claim 4, characterized in that the catch lever (31) juts out slightly from the front of the vertical plate (3).

6. An automatic machine according to claim 1, characterized in that the rocker (29) is supported at its base by a clamp (28) integral with the carriage (4) by horizontal hinge pins (30), and in that a pressure spring (36) is placed in its upper part between it and the carriage.

7. An automatic machine according to claim 6, characterized in that a damping element (37) is provided on the rocker arm (29).

8. An automatic machine according to claim 1, characterized in that a guide ramp (52) fastened to the rear of the rocker (29) bears against the cutting-wheel carrier (34) and has an opening for the cutting wheel (35) to pass through.

9. An automatic machine according to claim 1, characterized in that a fixed means provided on the machine is a cam (39) placed at the base of the vertical beam (2) and intended to act upon an element integral with the carriage (4) consisting of a wheel (38) in the direction locking the rocker (29).

10. An automatic machine according to claim 1, characterized in that a fixed means provided on the machine is a limit-of-travel switch (41) mounted on the bracket (21) and intended to act upon a stop (40) integral with the carriage (4) in order to control the jack (24, 26) and a means for breaking off the glass (42, 43).

11. An automatic machine according to claims 1 and 10, characterized in that the breaking means is a jack (42) mounted above the horizontal support (7) and oriented such that its movable breaking end piece (43) is propelled horizontally and with a certain inclination towards the glass plate.

12. An automatic machine according to claims 1 and 2, characterized in that a rail (44) is attached to the front face of the vertical plate (3) and over its entire height and in that a sliding stop (45) equipped with a clamping lever (53) limiting the travel of the carriage (4) is clamped at the desired predetermined height.

13. An automatic machine according to claim 12, characterized in that the stop (45) is connected by a rod (46) to a transmission slide (47) also equipped with an adjusting and clamping lever (48).

14. An automatic machine according to claim 13, characterized in that the rod (46) slides freely in the stop (45), a spring (49) coaxial with the rod being placed in between the said stop and the slide (47).

15. An automatic machine according to claim 1, characterized in that it comprises rollers (6) mounted between two supports in the form of angle-steel bars (8, 9) forming the horizontal support for the glass plate, and in that a slide (10) which can be clamped to an angle-steel bar (9) carries a stop (13) and a case (14) containing a measuring tape, one end of which is fastened to the foot of the beam (2).

16. An automatic machine according to claim 1, characterized in that it comprises a ledge serving as a horizontal support for the piece of glass to be cut off and mounted on an angle-steel bar, in that a slide (17) which can be clamped onto the said angle-steel bar (16) carries a stop (18) and in that the end of a measuring tape located at the foot of the beam (2) is attached to the said slide.

FIG.1

FIG.2

FIG. 6

FIG. 3

FIG. 4

FIG. 5